# EUROPEAN PATENT SPECIFICATION

(11) **EP 2 313 658 B1**
(45) Date of publication and mention of the grant of the patent: **06.01.2016**
(21) Application number: 09786771.7
(22) Date of filing: 31.07.2009
(51) Int. Cl.: F04D 13/08, F04D 15/02, H02K 5/22

(54) **CABLE CLAMPING DEVICE FOR SUBMERSIBLE PUMP**
KABELKLEMMVORRICHTUNG FÜR TAUCHPUMPE
DISPOSITIF DE MANDRIN POUR CABLES ELECTRIQUES DE POMPES IMMERGEES

(30) Priority: 04.08.2008 IT BO20080494
(43) Date of publication of application: 27.04.2011
(73) Proprietor: Pedrollo S.p.a., 37047 San Bonifacio (Verona) (IT)
(72) Inventor: PEDROLLO, Silvano, I-37047 San Bonifacio (VR) (IT)
(74) Representative: di Francia, Vincenzo
(86) International application number: PCT/IB2009/053341
(87) International publication number: WO 2010/015977

(56) References cited:
- WO-A-03/048584
- US-A- 4 626 175
- US-A- 5 480 290
- US-B1- 6 235 989

## Description

### Technical Field

The present invention relates to a chucking device for submersible pumps and the like.

### Background Art

It is known that in order to drain wells, underground rooms, tanks or other types of similar reservoirs, pumping members, such as in particular submersible pumps, are generally used for domestic, civil and industrial purposes. Known submersible pumps generally provide for a lower support base, a delivery body associated at the upper part to the support base, inside which is arranged a rotor member in communication with an external environment, a generally cylindrical motor body, suited to house a motor member, and a covering cap suited to close, the motor body at the upper part. Usually, the covering cap is provided with a gripping member or handle to facilitate the gripping of the submersible pump, in such a manner to make lifting and transfer thereof easier.

An example of a submersible pump of the known type is illustrated by the patent n° US 5,207,562. The described submersible pump is provided with a particular handle suitable to comprise a passage channel for the electrical power supply cables of the motor member therein, as well as a passage port for the introduction of lubrication oil and coolant into the motor body.

Another example of a submersible pump of the prior art is provided in US 4 626 175 which illustrates a submersible pump comprising means for switching on and switching off connected to liquid level sensor means for the liquid to be transferred, arranged in such a manner to detect the presence of liquid and control the switching on and switching off of the pump depending on the detected liquid level.

The patent n° US 2,701,529 illustrates a submersible pump comprising a shell equipped with a cylindrical lateral wall, a bottom wall and an upper cap for closing the open top of the pump. Such a cap has a single passage opening for the power supply cable of the operating motor of the rotor member of the pump, as well as for a couple of electric cables connected to the same motor and suitable to be connected with external liquid level control means. For connecting and chucking the latter control means, the cap laterally bears a couple of lateral supports in which respective electric cables are suitable to be inserted and appropriately connected.

In the submersible pumps of the prior art there is the particular need of ensuring the reliability of the electric connection in any condition of use. Particularly, a traction acting on the cables must not compromise the electric connection for the actuation and the correct functioning of the rotor member. That occurs for example when the sub-mersible pump is accidentally subjected to undesired displacement because of collisions or accidental actions, or when the pump is deliberately grasped by a portion of the same cable to be lifted or displaced. In such cases the cable exposed to excessive traction may disconnect from the user motor or, in case, undergo damages. To restore the electric connection, it is necessary to interrupt the use of the submersible pump, to dismount it and successively restore the operating conditions.

Therefore the mechanical resistance of the electric connection is a critical problem for the use of portable type submersible pumps, which require easy and fast transport, to allow efficient use in emergency conditions.

In order to meet such requirements, submersible pumps of the prior art adopt chucking devices suitable to constrain a portion of the electric cables to the shell of the pump by means of tie-wrap type mechanical members. But such chucking devices do not completely meet the requirements of security and reliability of the interested sector.

### Disclosure of Invention

### Disclosure

The task of the present invention is that of overcoming the aforementioned drawbacks, by devising a chucking device for the electric cables for submersible pumps suitable to allow a secure and reliable functioning in any condition of use, particularly any time the pump electric connection cables are exposed to traction stresses and the like.

Within this scope a further object of the present invention is that of providing a chucking device for the electric cables for submersible pumps which is of simple and effective use.

Another object of the invention is that of providing a chucking device for the electric cables for submersible pumps that is easy to manufacture, versatile in use, as well as relatively inexpensive.

The abovementioned objects are attained, according to the present invention, by the chucking device for the electric cables for submersible pumps according to claim 1.

### Description Of Drawings

The details of the invention shall be more apparent from the detailed description of a preferred embodiment of the chucking device for tor the cables for submersible pumps and the like, illustrated for indicative purposes in the attached drawings, wherein:
figure 1 shows a longitudinal sectional view of a submersible pump provided with the chucking device according to the present invention;

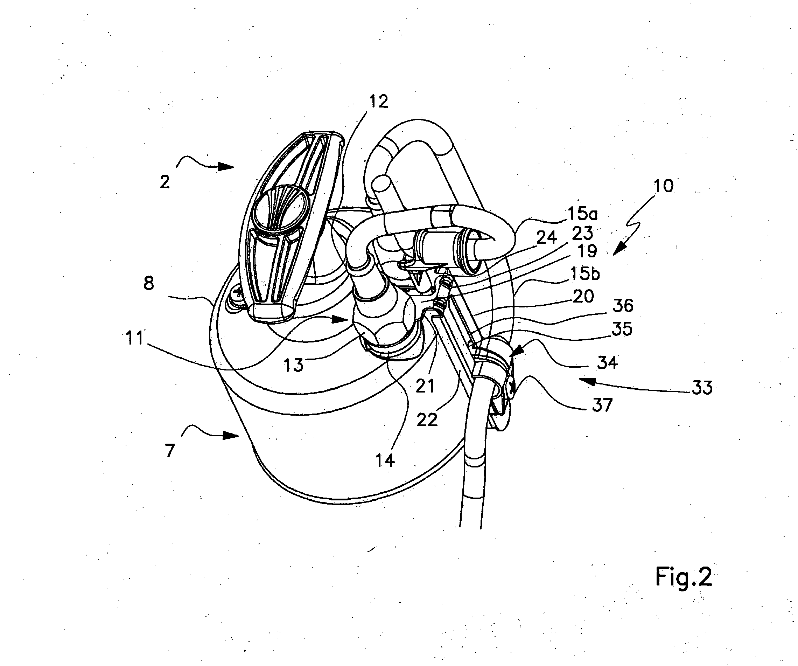

figure 2 shows a perspective view of an upper portion of the same submersible pump with the chucking device according to the present invention;

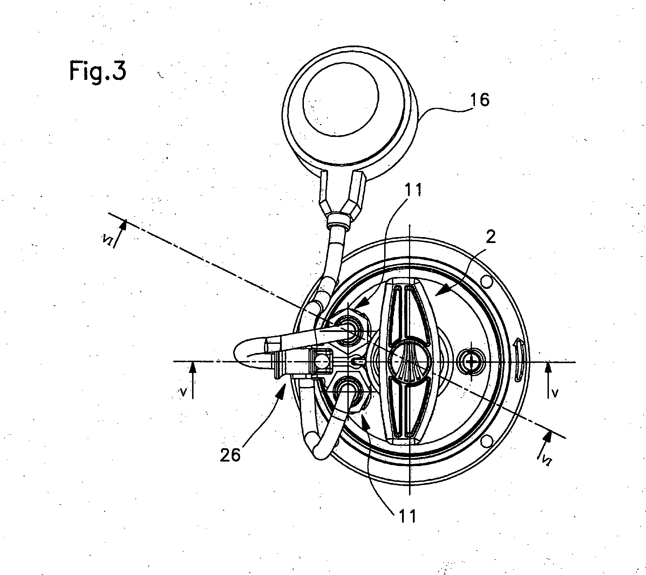

figure 3 shows a plan view of the portion illustrated in figure 2;

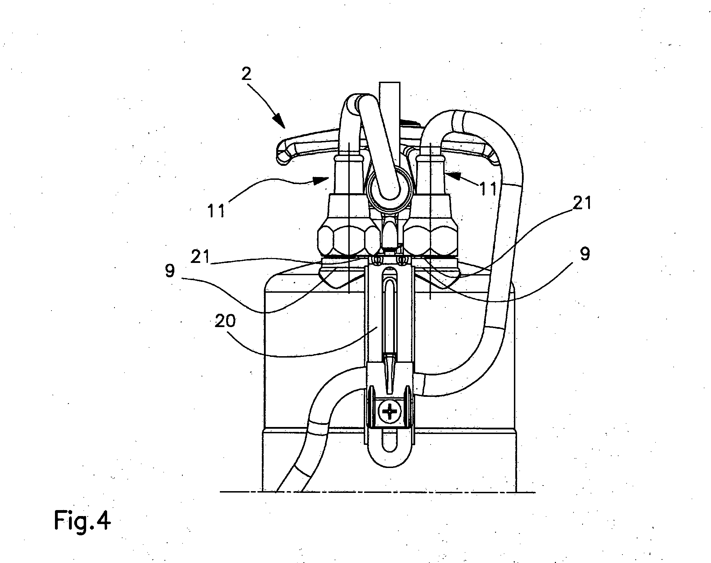

figure 4 shows a lateral view of the same portion of the pump according to the present invention;

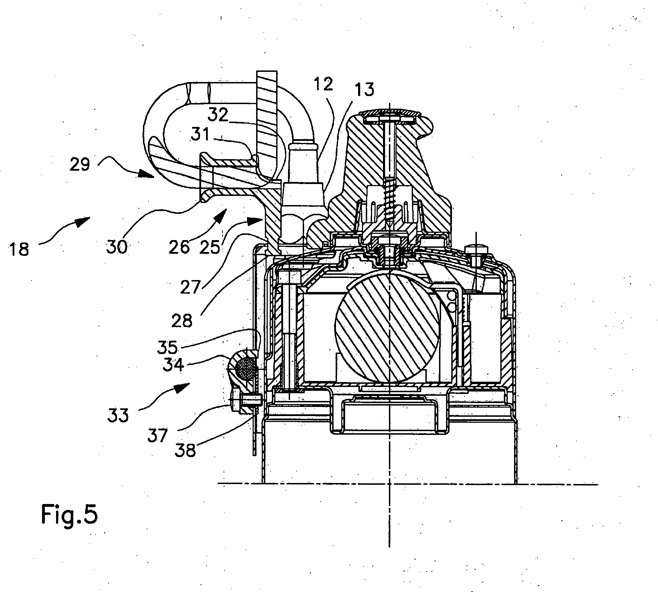

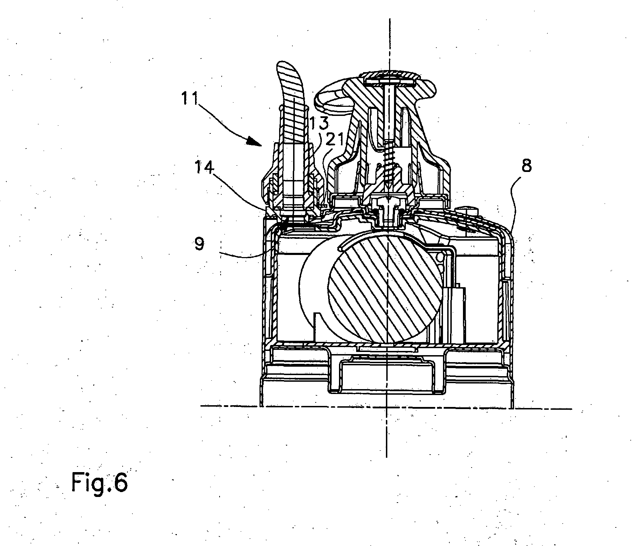

figures 5 and 6 show respective axial sectional views of the same portion of the pump, according to planes V-V and VI-VI of figure 3;
figure 7 shows an axial sectional view of the same portion of the pump, according to plane V-V of figure 3, in a different embodiment.

### Best Mode

With special reference to such figures, a pump of the submersible type comprising the chucking device 10 according to the invention is indicated in its entirety with 1.The pump 1 comprises a support base 3, a delivery body 4 connected - at the upper part - to the support base 3 and suited to house the rotor member therein, intended to transfer a liquid in which the pump 1 is submerged at least partially. In particular, at the connection portion between the delivery body 4 and the support base 3, the pump 1 has an open central section for the inlet of the liquid to be transferred. The delivery body 4 also provides for a peripheral outflow section 5 for the outflow of the liquid transferred by the rotor member. At the upper part of the delivery body 4 is provided a motor body 6 preferably made up of a cylindrical casing suited to house an electrical motor therein for the operation of the abovementioned rotor member. In particular, the motor body 6 is preferably arranged, just like the motor and the rotor member, with vertical longitudinal axis.

As a covering for the motor body 6 is provided an upper closing unit 7, to which the handle 2 is applied. The closing unit 7 comprises a substantially cylindrical-shaped external cap 8 suited to be tight connected to the motor body 6. Preferably, the external cap 8 is suited to close - at the upper part - the motor body 6 by interposing mechanical seal means. For example, annular-shaped sealing means may be provided, prearranged at a suitable seat obtained at the upper edge of the motor body 6 suited to be coupled to the lower edge of the external cap 8.

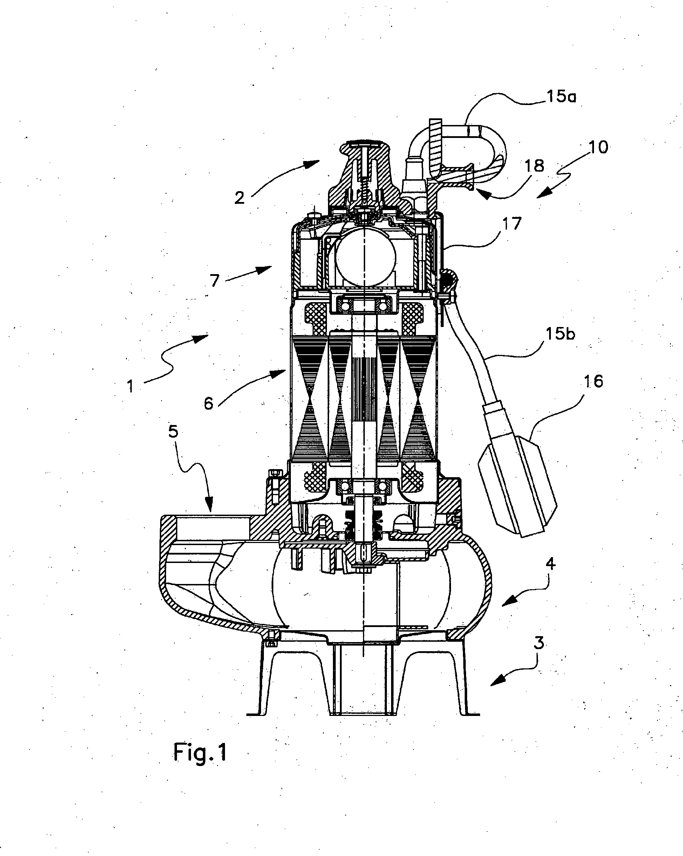

The external cap 8 also comprises one or more openings 9 arranged preferably at the top, for the respective engagement of cable-holder units 11. The cable-holder units 11 are suitable to allow the passage of electrical power supply cables of the motor member connected to the rotor member and of float sensor means, as better explained in the following. Particularly the cable-holder units 11 comprise respective tubular elements 12, preferably made of rubber, suitable to be tight inserted inside respective tightening sleeves 13 for tightening to the pump. The tightening sleeves 13 are suited to be fixed to the external cap 8 by means of threaded coupling to respective engagement bushings 14 constrained in a fixed manner to the openings 9. The tubular elements 12 are arranged, in use, with longitudinal axis parallel to the longitudinal axis of the pump 1. In the illustrated case, a couple of cable-holder units 11 is prearranged: a first cable-holder unit 11 is suitable to allow the passage of an electric cable 15a suited to connect the rotor member actuating motor with the external power supply unit; a second cable-holder unit 11 is suitable to allow the passage of an electric cable 15b designed to connect the rotor member electric actuating motor with sensor means 16, suited to detect the liquid level in the environment wherein the pump 1 is positioned (see fig. 1). The sensor means 16 are suitable to promptly actuate the rotor member in case of detection of an increase of the liquid level over a predetermined threshold level. In the illustrated case the sensor means are of the float type, therefore without liquid they are carried hanged up at a given height from the floor, at the end of the electric cable 15b. In case a quantity of liquid is accumulated on the floor of the environment surrounding the pump 1, such as to reach and to be higher of a level corresponding to said height, the sensor means 16 are lifted on the free surface of the water by effect of the floating, sending appropriate actuation signals to the motor of the pump 1 (see fig. 1). On the other hand, in a totally analogous manner, switch off signals are sent by the sensor means 16 when the liquid level decreases under said threshold value.

The chucking device 10 comprises coupling means 17 to the pump 1 and clamping means 18 designed to be constrained to the aforementioned coupling means 17 for clamping the electric cables.

The coupling means 17 are preferably constituted of a coupling frame suitable to be fixed at the pump preferably in correspondence with the closing unit 7 in a medial position between the cable-holder units 11. In the illustrated case the coupling frame 17 is realised by means of an angular bracket presenting a first flange 19 and a second flange 20, substantially perpendicular to each other. The substantially flat first flange 19 is designed to be interposed and clamped at the lateral edges between the bushings 14 and the sleeves 13. The second flange 20, substantially flat as well, is arranged adjacent to the external shell of the pump 1, with the median axis basically parallel to the longitudinal axis of the pump 1. The longitudinal edges 22 of the second flange 20 are preferably folded up to give greater rigidity to the bracket 17. On the other hand, the edge formed between the first and the second flange 19, 20 may present notches 23 for releasing tensions resulting from the moulding of the bracket 17.

The first flange 19 comprises a notch 24 with an open profile on the opposite side of said edge, to allow the insertion of the clamping means 18.

The clamping means 18 comprise a connector 25 to the first flange 19 of the bracket 17 and a tear-resistant clamping member 26 for a respective cable or for a plurality of cables. The connector 25 preferably consists of a shank made integral to the tear-resistant clamping member 26. The shank 25 presents a section narrowing 27 adjacent to an end head 28 having transverse dimensions bigger than the transverse dimensions of the notch 24 of the first flange 19. In use the narrowing 27 of the shank 25 is therefore suitable to be inserted in the notch 24 through the respective open side and to be axially blocked by means of the end head 28. The shank 25 results instead free to move along the longitudinal axis of the notch 24 between a most external position with respect to the longitudinal axis of the pump 1, in correspondence with the closed edge of the notch 24, and a most internal position with respect to the aforementioned longitudinal axis, in correspondence with the open side of the notch 24. The displacement of the shank 25 beyond the aforementioned open edge is prevented by the presence of the closing unit 7 of the pump 1.

The tear-resistant clamping unit 26 consists of a sleeve provided with an axial hole 29, inside which an electric cable 15a is suitable to be inserted freely sliding. Preferably the tear-resistant sleeve 26 extends perpendicularly with respect to the shank 25, such that in use the axial hole 29 of the tear-resistant sleeve 26 is inclined with respect to the longitudinal axis of the pump 1. In the illustrated case, the median plane of the bracket 17 coincides with the median plane of the clamping means 18 and, in particular, the tear-resistant sleeve 26 extends axially laterally to the shank 25 from the opposite portion with respect to the axis of the pump 1.

The tear-resistant sleeve 26 shapes respective open final lengths 30, 31 for inserting the electric cable 15a. The first final length 30, localised at the opposite portion with respect to the shank 25, preferably presents an axial section with diverging profile and is suited to house, in use, the end of the portion of electric cable 15a directly connected to the motor of the pump 1. In correspondence with the second final length 31, closed to the shank 25, the tear-resistant sleeve 26 presents a linked longitudinal countersink 32 which affects the only portion of the sleeve set opposite to the shank 25, thus reducing the longitudinal extent of the corresponding portion of tubular wall. For example if the pump 1 is lifted grasping the free end of the portion of electric cable 15a protruding from the longitudinal countersink 32, the same free portion of electric cable, being flexible, is induced to arrange having the axis substantially parallel or according to a direction decomposable in a parallel component as to the axis of the shank 25. So thanks also to the presence of the longitudinal countersink 32 a misalignment is determined between the possible traction acting in the direction of the electric cable on the clamping means 18 and the reaction exerted on this latter by effect of the constraint between the notch 24 and the shank 25. Such a misalignment produces in particular on the tear-resistant sleeve 26 a torque in the direction suitable to clamp the traction stressed cable, preventing this latter from sliding inside the same tear-resistant sleeve 26.

The chucking device 10 further comprises blocking means 33 for blocking the electric cable 15b connected to the sensor means 16, suitable to allow the adjustment of the vertical positioning thereof. The blocking means 33 comprise a preferably open section profiled element 34, suited to receive a portion of electric cable. The profile element 34 shapes a sliding tooth 35 suitable to be inserted sliding inside a leading eyelet 36 suitably provided in correspondence with the axis of the second flange 20. The profiled element 34 is suited to be fixed on the bracket 17 in the desired position along the leading eyelet 36 by means of the tightening between screw means 37 and a counterplate 38 set against the rear portion of the second flange 20.

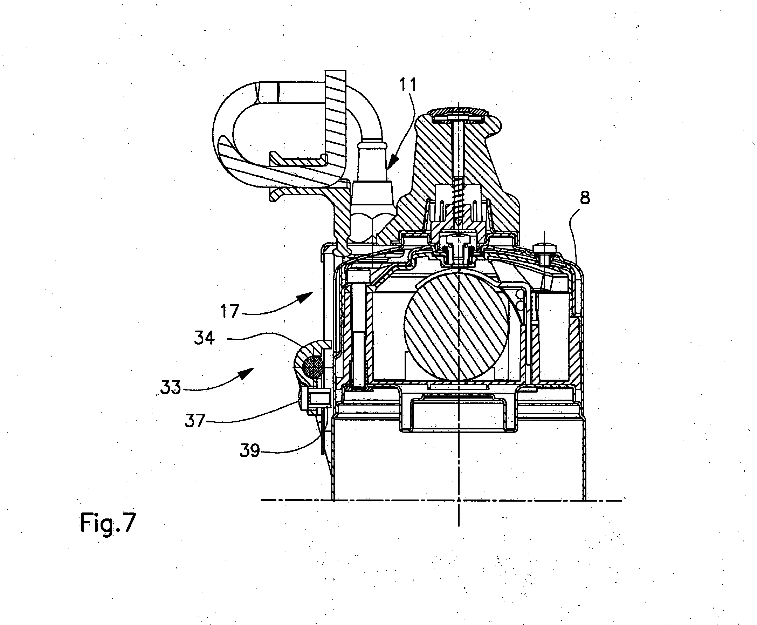

Alternatively, the screw means 37 are suitable to be coupled to a respective expansion element 39 realised on the profiled element 34 and shaping respective expansion teeth suited to fix the same to the bracket 17 (see fig. 7).

According to a further embodiment, not illustrated, the clamping means 18 can comprise a connector 25 consisting of flexible chain means suitable to be coupled to the first flange 19 of the bracket 17 in correspondence with an appropriate eyelet arranged therein. At the extreme opposite, the clamping means 18 provide a tearresistant clamping member 26 completely analogous to the one previously described. More precisely, in such a case the chain is suitable to be articulated at the base of tear-resistant sleeve 26 in correspondence with the second final length 31. Analogously to what is already described, consequently if the electric cable inserted in the tear-resistant sleeve 26 is drawn at the end connected to the power supply unit, the sleeve 26 tends to rotate about the point hinged to the chain in the direction where the edge of the longitudinal countersink 32 exerts a compression on the stressed electric cable, blocking any axial sliding of the same.

The operation of the chucking device for the cables for submersible pumps and the like according to the invention can be easily understood from the previous description.

In a mounting step of the electric cables to the pump 1, the electric cable designed to be connected to the external power supply unit is inserted through the tear-resistant sleeve 26 and successively through the respective cable-holder unit 11 to be connected to the motor. More precisely the end of the electric cable provided with connecting electrodes is inserted from the second final length 31, exiting from the first final length 30 to be subsequently inserted in the cable-holder unit 11 and at last connected to the rotor member actuating motor.

In the same way, the electric cable of the sensor means 16 is inserted in the respective cable-holder unit 11 and connected to the motor.

Subsequently the shank 25 of the clamping means 18 is inserted in the notch 24 of the bracket 17 for fixing to the pump 1. More precisely, the bracket 17 is arranged between the cable-holder units 11 and tightened between the clamping sleeves 13 and the bushings 14. A portion of the electric cable of the sensor means 16 is at last placed in the blocking means 33 and fixed to the second flange 20 of the bracket 17 by means of the screw means 37, adjusting the vertical positioning of the blocking means along the leading eyelet 36.

Any time the electric cable 15a connected to the power supply unit is traction stressed, the tear-resistant sleeve 26 is stressed by a torque that determines the rotation of the same in such a way as to compress the same electric cable against the respective edge of the second final length 31, in correspondence with the longitudinal countersink 32. Because of such a compression the electric cable 15a is axially clamped inside the tear-resistant sleeve 26. In substance the clamping of the electric cable prevents the traction from being transmitted to the portion of the cable exiting from the first length 30 and directly connected to the motor, preserving the electric connection.

Therefore, the chucking device for the cables for submersible pumps according to the invention attains the aim of ensuring a reliable and safe use in any condition, particularly if the cables of electric connection are traction stressed. Such a result is attained thanks to the presence of the tear-resistant sleeve 26 which is constrained to the pump 1 by means of coupling with the shank 25. The particular constraint condition of the tear-resistant sleeve 26 to the pump 1 is such as to involve a misalignment between the traction transmitted through the electric cable to the tear-resistant sleeve and the reaction of the mechanical constraint to the pump 1, in correspondence with the head of the shank 25. Such misalignment generates a torque which makes the tear-resistant sleeve 26 rotate in the sense of compressing a portion of cable against the same sleeve, effectively blocking the cable.

A characteristic of the invention consists in the fact that the chucking device 10 is very quick and easy to mount on the submersible pump 1. The chucking device 10 consists of very few mechanical pieces that are easily assembled. In the same way, the power supply cable 15a can be easily inserted in the tear-resistant sleeve 26 mounted on the pump 1.

A further aspect of the invention consists in the fact that the blocking means 33 of the electric cable 15b of the sensor means 16 can be arranged on the bracket 17 of the chucking device 10 according to the invention. This allows to adjust in a simple and precise manner the vertical height at which the sensor means 16 are hanged up to the pump 1, so, the threshold level of the liquid in correspondence of which a switch on signal is sent to the pump 1 to drain the liquid.

Another advantage of the chucking device for cables according to the invention resides in the inexpensiveness of the realisation.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Clamping device for electric cables, in particular for submersible pumps and the like, comprising clamping means (18) of the electric cables (15a) suitable to be constrained to the body of the pump through coupling means (17), **characterized in that** said clamping means (18) comprise a connector (25) suitable to be constrained to said coupling means (17) and a tear-resistant sleeve-shaped clamping member (26), suitable to house freely sliding a portion of at least one said electric cable (15a), wherein said clamping member (26) extends laterally to the connector (25), so that in use the axis of the sleeve (26) is inclined with respect to the longitudinal axis of the pump, so that when the said electric cable (15a) is traction-stressed in order to lift the pump, it is compressed against an edge of said sleeve (26), and it is clamped inside said sleeve (26) upon the effect of such compression.

2. Clamping device according to claim 1, **characterized in that** a final length (31) of said clamping member (26) presents a longitudinal countersink (32) set against said connector (25) such to determine a misalignment between said traction, acting on said electric cable (15a), and the reaction exerted by said connectors (25) on said tear-resistant sleeve (26).

3. Clamping device according to claim 2, **characterized in that** said connector (25) consists of a shank shaped by said tear-resistant sleeve (26) and axially constrained by a notch (24) realized in said coupling means (17) to said pump (1).

4. Clamping device according to claim 3, **characterized in that** said shank (25) develops integrally to said tear-resistant sleeve (26) along a direction basically perpendicular to said sleeve (26).

5. Device according to claim 2, **characterized in that** said connector (25) consists of flexible chain means, suitable to be coupled to said coupling means (17) by an appropriate eyelet arranged in them and suitable to be articulated at the base of said tear-resistant sleeve (26) in correspondence with said final length (31).

6. Clamping device according to one of the previous claims, **characterized in that** said coupling means (17) comprise an angular bracket having a first flange (19) intended to be clamped above said pump (1) and a second flange (20) basically perpendicular to said first flange (19) and arranged adjacent to the external shell of said pump (1).

7. Clamping device according to one of the previous claims, **characterized in that** it comprises blocking means (33) for at least one electric cable (15b) connecting to sensors (16), said blocking means (33) being suitable to be positioned on said coupling means (17) in adjustable way along a longitudinal direction to said coupling means (17).

8. Device according to claim 7, **characterized in that** said blocking means (33) comprise a profiled element (34) suitable to receive a portion of said electric cable (15b), to be fixed to said coupling means (17) through screw means (37), and conforming a sliding tooth (35) suitable to be inserted sliding within a sliding inside a longitudinal leading eyelet (36) provided in correspondence with said coupling means (17).

9. Device according to claim 8, **characterized in that** said screw means (37) are suitable to be coupled to a respective expansion element (39) realized on said profiled element (34) and conforming respective expansion teeth suitable to clamp the same element (34) to said coupling means (17).

10. Submersible pump **characterized in that** it comprises a clamping device for the electric cables according to one of the previous claims.

## Patentansprüche

1. Klemmvorrichtung für Elektrokabel, insbesondere für Tauchpumpen und dergleichen, umfassend Klemmmittel (18) für die Elektrokabel (15a), die dazu geeignet sind, durch Kopplungsmittel (17) am Pumpenkörper gehalten zu werden, **dadurch gekennzeichnet, dass** die Klemmmittel (18) ein Anschlussstück (25) umfassen, das dazu geeignet ist, an den Kopplungsmitteln (17) gehalten zu werden, und ein reißfestes hülsenförmiges Klemmelement (26), das dazu geeignet ist, einen Abschnitt mindestens eines Elektrokabels (15a) frei gleitend unterzubringen, wobei sich das Klemmelement (26) seitlich des Anschlussstücks (25) erstreckt, so dass die Achse der Hülse (26) während des Gebrauchs im Verhältnis zur Längsachse der Pumpe derart geneigt ist, dass das Elektrokabel (15a) bei Zugbelastung zum Heben der Pumpe gegen einen Rand der Hülse (26) gepresst und durch die Wirkung eines derartigen Pressens im Inneren der Hülse (26) eingeklemmt wird.

2. Klemmvorrichtung nach Anspruch 1, **dadurch gekennzeichnet, dass** eine endgültige Länge (31) des Klemmelements (26) eine längliche Versenkung (32) darstellt, die zum Anschlussstück (25) derart gesetzt ist, dass eine Fehlausrichtung zwischen der Zugkraft, die auf das Elektrokabel (15a) wirkt, und der Reaktion, die von den Anschlussstücken (25) auf die reißfeste Hülle (26) ausgeübt wird, bestimmt wird.

3. Klemmvorrichtung nach Anspruch 2, **dadurch gekennzeichnet, dass** das Anschlussstück (25) aus einem Schaft besteht, der von der reißfesten Hülse (26) gebildet ist und axial von einer Nut (24) gehalten wird, die im Kopplungsmittel (17) für die Pumpe (1) umgesetzt ist.

4. Klemmvorrichtung nach Anspruch 3, **dadurch gekennzeichnet, dass** sich der Schaft (25) integral mit der reißfesten Hülse (26) entlang einer Richtung entwickelt, die im Wesentlichen senkrecht zur Hülse (26) liegt.

5. Klemmvorrichtung nach Anspruch 2, **dadurch gekennzeichnet, dass** das Anschlussstück (25) aus einem flexiblen Verkettungsmittel besteht, das dazu geeignet ist, durch eine entsprechende Öse, die im Kopplungsmittel (17) angeordnet ist, an dieses gekoppelt zu werden, und dazu geeignet ist, übereinstimmend mit der endgültigen Länge (31) gelenkig an der Basis der reißfesten Hülse (26) angebracht zu sein.

6. Klemmvorrichtung nach einem der vorhergehenden Ansprüche, **dadurch gekennzeichnet, dass** die Kopplungsmittel (17) eine winklige Halterung mit einem ersten Flansch (19) umfasst, der für das Anklemmen oberhalb der Pumpe (1) vorgesehen ist, und einem zweiten Flansch (20), der sich im Grunde senkrecht zum ersten Flansch (19) erstreckt und angrenzend an die Außenummantelung der Pumpe (1) angeordnet ist.

7. Klemmvorrichtung nach einem der vorhergehenden Ansprüche, **dadurch gekennzeichnet, dass** sie Arretierungsmittel (33) für mindestens ein Elektrokabel (15b) umfasst, das mit Sensoren (16) verbindet, wobei das Arretierungsmittel (33) dazu geeignet ist, in Längsrichtung des Kopplungselements (17) in justierbarer Weise an dem Kopplungsmittel (17) positioniert zu sein.

8. Vorrichtung nach Anspruch 7, **dadurch gekennzeichnet, dass** die Arretierungsmittel (33) ein Profilelement (34) umfassen, das dazu geeignet ist, einen Abschnitt des Elektrokabels (15b) aufzunehmen und durch Schraubmittel (37) am Kopplungsmittel (17) befestigt zu sein, und das sich an einen Gleitzahn (35) anpasst, der dazu geeignet ist, gleitend in einen Gleitanker im inneren einer in Längsrichtung führenden Öse (36) eingesetzt zu sein, die übereinstimmend mit dem Kopplungsmittel (17) bereitgestellt ist.

9. Vorrichtung nach Anspruch 8, **dadurch gekennzeichnet, dass** die Schraubmittel (37) dazu geeignet sind, an ein entsprechendes Ausdehnungselement (39) gekoppelt zu sein, das an dem Profilelement (34) umgesetzt ist und sich an einen entsprechenden Ausdehnungszahn anpasst, der dazu geeignet ist, selbiges Element (34) an das Kopplungsmittel (17) anzuklemmen.

10. Tauchpumpe, **dadurch gekennzeichnet, dass** sie eine Klemmvorrichtung für die Elektrokabel nach einem der vorhergehenden Ansprüche umfasst.

## Revendications

1. Dispositif de serrage pour des câbles électriques, en particulier pour des pompes submersibles et similaires, comprenant un moyen de serrage (18) des câbles électriques (15a) adapté pour être contraint sur le corps de la pompe via un moyen d'accouplement (17), **caractérisé en ce que** ledit moyen de serrage (18) comprend un connecteur (25) adapté pour être contraint sur ledit moyen d'accouplement (17) et un élément de serrage en forme de manchon (26) résistant à la déchirure adapté pour recevoir de manière librement coulissante une portion d'au moins l'un desdites câbles électriques (15a), dans lequel ledit élément de serrage (26) s'étend latéralement vers le connecteur (25), de telle sorte qu'en service, l'axe du manchon (26) est incliné par rapport à l'axe longitudinal de la pompe, de façon à ce que lorsque ledit câble électrique (15a) est mis en traction pour relever la pompe, il est comprimé contre un bord dudit manchon (26) et serré à l'intérieur dudit manchon (26) par l'effet d'une telle compression.

2. Dispositif de serrage selon la revendication 1, **caractérisé en ce qu'**une longueur finale (31) dudit élément de serrage (26) présente un fraisage longitudinal (32) contre ledit connecteur (25) de manière à déterminer un désalignement entre ladite traction, qui agit sur ledit câble électrique (15a), et la réaction exercée par lesdits connecteurs (25) sur ledit manchon résistant à la déchirure (26).

3. Dispositif de serrage selon la revendication 2, **caractérisé en ce que** ledit connecteur (25) consiste en une jambe conformée par ledit manchon résistant à la déchirure (26) et contrainte axialement par une encoche (24) réalisée dans ledit moyen d'accouplement (17) à ladite pompe (1).

4. Dispositif de serrage selon la revendication 3, **caractérisé en ce que** ladite jambe (25) se développe de manière intégrée avec ledit manchon résistant à la déchirure (26) selon une direction essentiellement perpendiculaire audit manchon (26).

5. Dispositif selon la revendication 2, **caractérisé en ce que** ledit connecteur (25) consiste en un moyen à chaîne flexible adapté pour être accouplé audit moyen d'accouplement (17) par un oeillet approprié agencé dans celui-ci et adapté pour être articulé à la base dudit manchon résistant à la déchirure (26) conformément à ladite longueur finale (31).

6. Dispositif de serrage selon l'une des revendications précédentes, **caractérisé en ce que** ledit moyen d'accouplement (17) comporte un support angulaire comportant une première bride (19) destinée à être serrée au-dessus de ladite pompe (1) et une deuxième bride (20) essentiellement perpendiculaire à ladite première bride (19) et agencée de manière adjacente à la coque externe de ladite pompe (1).

7. Dispositif de serrage selon l'une des revendications précédentes, **caractérisé en ce qu'**il comprend un moyen de blocage (33) pour au moins un câble électrique (15b) connecté à des capteurs (16), ledit moyen de blocage (33) étant adapté pour être positionné sur ledit moyen d'accouplement (17) de manière ajustable selon une direction longitudinale dudit moyen d'accouplement (17).

8. Dispositif selon la revendication 7, **caractérisé en ce que** ledit moyen de blocage (33) comprend un élément profilé (34) adapté pour recevoir une portion dudit câble électrique (15b), à fixer audit moyen d'accouplement (17) via un moyen à vis (37), et conformant une dent coulissante (35) adaptée pour être insérée par coulissement dans un coulisseau à l'intérieur d'un oeillet de guidage longitudinal (36) pourvu en correspondance avec ledit moyen d'accouplement (17).

9. Dispositif selon la revendication 8, **caractérisé en ce que** ledit moyen à vis (37) est adapté pour être accouplé à un élément d'expansion respectif (39) réalisé sur ledit élément profilé (34) et conformant des dents d'expansion respectives adaptées pour serrer ledit élément (34) audit moyen d'accouplement (17).

10. Pompe submersible **caractérisée en ce qu'**elle comprend un dispositif de serrage pour les câbles électriques selon l'une des revendications précédentes.
